(19)

Europäisches
Patentamt
European
Patent Office
Office européen
des brevets

(11) **EP 2 154 644 A1**

(12) **EUROPEAN PATENT APPLICATION**
published in accordance with Art. 153(4) EPC

(43) Date of publication:
**17.02.2010 Bulletin 2010/07**

(21) Application number: **07817363.0**

(22) Date of filing: **05.12.2007**

(51) Int Cl.:
***G06Q 30/00*** *(2006.01)*

(86) International application number:
**PCT/CN2007/071176**

(87) International publication number:
**WO 2008/148280 (11.12.2008 Gazette 2008/50)**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(30) Priority: **01.06.2007 CN 200710041598**

(71) Applicant: **Wu, Rongbin
Shanghai 200093 (CN)**

(72) Inventor: **Wu, Rongbin
Shanghai 200093 (CN)**

(74) Representative: **Cabinet Plasseraud
52, rue de la Victoire
75440 Paris Cedex 09 (FR)**

(54) **METHOD FOR CALCULATING MOVING AVERAGE BY USING WEIGHTED BARGAIN AMOUNT**

(57) A method for calculating moving average with weighed transaction volume is disclosed according to the embodiments of the present disclosure. The method includes: selecting one stock, and acquiring a total stock capital of the stock; setting a calculating subject of accumulative transaction volume, where the calculating subject is all of or a part of the total stock capital of the stock; if a moving average with weighed transaction volume for a certain day is to be calculated, computing backwards from that day, accumulating the products of an everyday transaction volume multiplied by a turnover factor up until the accumulated value equals the calculating subject of accumulative transaction volume; multiplying an everyday average transaction price with an everyday transaction volume and further multiplying with an everyday turnover factor, adding up the products to form a sum; and dividing the sum by the calculating subject of accumulative transaction volume to obtain the moving average with weighed transaction volume.

**Description**

FIELD OF THE INVENTION

The present disclosure relates to a method for technical analysis of stock investment, and more particularly, to a data processing method in financial investment field.

BACKGROUND

Moving average is one of the commonly used indicators in technical analysis of stock market. Take a certain number of days (e.g., 10 days or 20 days, etc.) and calculate a simple mean of stock prices during these days, i.e.,

$$\text{moving average} = \frac{\sum_{i=1}^{n} P_i}{n} \qquad (1)$$

Where n denotes the number of selected days, Pi denotes the selected stock price, typically the closing price.

Moving average has two major defects, one of which lies in the selection of a number of days, artificial factors are involved without an objective standard. The second defect lies in that no consideration is given for the factor of transaction volume. Each stock has a total stock capital. Upon transactions at the market, the transaction price of some parts of the stock may remain the same or become different otherwise. If one stock has m prices, denoted by Pi, where i is an integral from 1 to m, and the volume of shares transacted at price Pi is denoted by Vi, then the total average transaction price for this stock is, average

$$\text{transaction price} = \frac{\sum_{i=1}^{m} P_i \cdot V_i}{\sum_{i=1}^{m} V_i} \qquad (2)$$

where $\sum_{i=1}^{m} Vi$ =total stock capital.

As can be seen, the average price involves the factor of transaction volume, whereas the existing moving average algorithm does not involve the factor of transaction volume.

SUMMARY

Embodiments of the present disclosure disclose a more prevalent technical solution that involves the factor of transaction volume, so as to overcome the defects in prior art and avoid the limitation of artificial selection for the number of days.

Embodiments of the present disclosure are achieved as follows:

An embodiment of the present disclosure is implemented by processing data issued at the market so as to obtain a value approximate to an average transaction price, which is called a moving average with weighed transaction volume. For one stock, by reference to its total stock capital, all of or a part of the total stock capital of the stock is taken as a calculating subject of accumulative transaction volume. If moving average with weighed transaction volume for a certain day is to be calculated, it should compute backwards from that day. Consider turnover during transactions and accumulate the product of an everyday transaction volume multiplied by a turnover factor up until the accumulated value equals the calculating subject of accumulative transaction volume. Multiply an everyday average transaction price with an everyday transaction volume and further with an everyday turnover factor, accumulate the products to form a sum. Divide the sum by the calculating subject of accumulative transaction volume to thereby obtain the moving average with weighed transaction volume. Wherein the everyday average transaction price is obtained by dividing everyday transaction amount by the everyday transaction volume. For the convenience of calculation, some simplifications may also be made, for example, the everyday average transaction price may be replaced by a closing price, etc. In addition, the accumulated products by multiplying the transaction volume with the turnover factor may be slightly greater than or less than the calculating subject of accumulative transaction volume, that is, an integral number of days is computed while no rounding is performed upon the transaction volume of an earliest day. Due to the great amount of calculation, the present disclosure is better to be implemented by a computer such that the result can be obtained conveniently and quickly. Specifically, an embodiment of the present disclosure provides a method as follows:. A method for calculating moving average with weighed transaction volume, comprising:

selecting one stock, and acquiring a total stock capital of the stock;

setting a calculating subject of accumulative transaction volume, where the calculating subject is all of or a part of the total stock capital of the stock; if moving average with weighed transaction volume for a certain day is to be calculated; computing backwards from that day and accumulating the products of an everyday transaction volume multiplied by a turnover factor up until the accumulated value equals the calculating subject of cumulative transaction volume;

multiplying an everyday average transaction price with an everyday transaction volume and further with an everyday turnover factor, adding up the products to form a sum; and

dividing the sum by the calculating subject of cumulative transaction volume to obtain the moving average with weighed transaction volume.

Wherein the everyday average transaction price is obtained by dividing everyday transaction amount by the everyday transaction volume.

According to the embodiments of the present disclosure, a method for calculating moving average with weighed transaction volume is disclosed upon an objective basis of total stock capital other than the selection for number of days required by the existing method for calculating moving average, and thereby the artificial factor is avoided. Moreover, the factor of transaction volume is also included. Suppose that there is an ideal state, i.e., the transaction volume is equal everyday and the turnover factor is 1 everyday, thus the method for calculating moving average with weighed transaction volume will be exactly the same as the existing method for calculating moving average. As can be seen, the existing method for calculating moving average is only one special case of the present disclosure. This shows the universality of the present disclosure.

DETAILED DESCRIPTION

An embodiment of the present disclosure provides a method for calculating moving average with weighed transaction volume. The method includes:

selecting one stock, and acquiring a total stock capital of the stock;

setting a calculating subject of accumulative transaction volume, where the calculating subject is all of or a part of the total stock capital of the stock;

if a moving average with weighed transaction volume for a certain day is to be calculated, computing backwards from that day, considering turnover during transactions and accumulating the products of an everyday transaction volume multiplied by a turnover factor up until the accumulated value equals the calculating subject of accumulative transaction volume;

multiplying an everyday average transaction price with the everyday transaction volume and further multiplying with an everyday turnover factor, adding up the products to form a sum; and

dividing the sum by the calculating subject of accumulative transaction volume to obtain the moving average with weighed transaction volume.

Wherein the everyday average transaction price is obtained by dividing everyday transaction amount by the everyday transaction volume.

For one stock, its transaction volume during a certain day is denoted by dv, and transaction amount is denoted by dt, thus an average transaction price for the stock during that day is computed as da=dv/dt. The stock has a total stock capital, all of or a part of which is taken as the calculating subject of accumulative transaction volume, denoted by tvol. If moving average with weighed transaction volume for a certain day is to be calculated for the stock, compute backwards from that day, consider turnover during transactions and multiply an everyday transaction volume by a turnover factor e, and add up the products to form an accumulated value, where $0 \leq e \leq 1$. If the accumulated value is less than tvol, then compute back to another previous day, accumulate the product of the transaction volume of the another previous day multiplied by the turnover factor. Keep accumulating the products of another previous n days up until the accumulated value of the products of multiplying the transaction volume with the turnover factor is greater than or equal to tvol, i.e.,

$$\sum_{i=1}^{n} dv_i \cdot e_i \geq tvol$$

Firstly, take a part of the transaction volume of the nth previous day as dvpn , and let

$$dvp_n = dv_n \cdot e_n - \left( \sum_{i=1}^{n} dv_i \cdot e_i - tvol \right)$$

$$( 3 )$$

The moving average with weighed transaction volume is computed as:

$$\text{moving average with weighed transaction volume} = \frac{\sum_{i=1}^{n-1} dv_i \cdot e_i \cdot da_i + dvp_n \cdot da_n}{\sum_{i=1}^{n-1} dv_i \cdot e_i + dvp_n} \qquad ( 4 )$$

Where dvi denotes transaction volume of a certain day, dai denotes an average transaction price of a certain day, ei denotes a turnover factor of a certain day, where $0 \leq ei \leq 1$, and i is an integral from 1 to n.
As can be seen from formula (3):

$$\sum_{i=1}^{n-1} dv_i \cdot e_i + dvp_n = tvol$$

The calculation may be simplified in specific applications. When $\sum_{i=1}^{n} dv_i \cdot e_i > tvol$ , without taking a part of dvn as dvpn , the calculation will be directly performed as:

$$\text{moving average with weighed transaction volume} = \frac{\sum_{i=1}^{n} dv_i \cdot e_i \cdot da_i}{\sum_{i=1}^{n} dv_i \cdot e_i} \qquad ( 5 )$$

Or, without dvn , the calculation will be performed as:

$$\text{moving average with weighed transaction volume} = \frac{\sum_{i=1}^{n-1} dv_i \cdot e_i \cdot da_i}{\sum_{i=1}^{n-1} dv_i \cdot e_i} \qquad ( 6 )$$

where $\displaystyle\sum_{i=1}^{n-1} dv_i \cdot e_i < tvol$ .

In formulas (5) and (6), the accumulated value by multiplying the transaction volume with the turnover factor is slightly greater than or less than tvol, such that an integral number of days is computed for convenience.

In addition, daily average transaction price dai in formulas (4), (5) and (6) may be replaced by a closing price, etc.

As shown in formula (4), if dv1=dv2=dv3=...=dvn=dvpn=tvol/n , and ei =1, then formula (4) is thus expressed as:

$$\text{moving average with weighed transaction volume}= \frac{\displaystyle\sum_{i=1}^{n} da_i}{n} \qquad (7)$$

If a closing price is used for calculation, formula (7) will be exactly the same as the formula (1) by replacing dai in formula (7) with the closing price Pi. This means that the existing method for calculating moving average is only one special case of the present disclosure.

Due to the large amount of data, the calculation according to the present disclosure is preferably to be performed by computer.

According to the embodiments of the present disclosure, a method for calculating moving average with weighed transaction volume is disclosed upon an objective basis of total stock capital other than the selection for number of days required by the existing method for calculating moving average, and thereby artificial factors are avoided. Moreover, the factor of transaction volume is also included. Suppose that there is an ideal state, i.e., the transaction volume is equal everyday, thus the method for calculating moving average with weighed transaction volume will be exactly the same as the existing method for calculating moving average. Thus, the existing method for calculating moving average is only one special case of the present disclosure. This shows the universality of the present disclosure.

According to an embodiment of the present disclosure. As described in the aforementioned description, there exists a turnover factor. In this embodiment, the everyday turnover factor is taken to be 1, e=1.

For one stock, its transaction volume during a certain day is denoted by dv, and transaction amount is denoted by dt, thus an average transaction price for the stock during that day is computed as da=dv/dt.

The stock has a total stock capital, all of or a part of which is taken as the calculating subject of accumulative transaction volume, denoted by tvol.

If a moving average with weighed transaction volume for a certain day is to be calculated for the stock, firstly, compute backwards from that day and accumulates the everyday transaction volume.

If the accumulated value is less than tvol, then accumulate the transaction volume back to another previous day up until n previous day, where the accumulated value of the transaction volume is greater than or equal to tvol, i.e.,

$$\sum_{i=1}^{n} dv_i \geq tvol \quad,$$

Take a part of the transaction volume of n previous day as dvpn , and let

$$dvp_n = dv_n - \left(\sum_{i=1}^{n} dv_i - tvol\right) \quad,$$

The moving average with weighed transaction volume is thus computed as:

$$\text{moving average with weighed transaction volume} = \frac{\sum_{i=1}^{n-1} dv_i \cdot da_i + dvp_n \cdot da_n}{\sum_{i=1}^{n-1} dv_i + dvp_n}.$$

Where dvi denotes transaction volume of a certain day, dai denotes an average transaction price of a certain day, and i is an integral from 1 to n.

According to the embodiments of the present disclosure, a method for calculating moving average with weighed transaction volume is proposed upon an objective basis of total stock capital other than the selection for number of days required by the existing method for calculating moving average, and thereby artificial factors are avoided. Moreover, the factor of transaction volume is also included. Suppose that there is an ideal state, i.e., the transaction volume is equal everyday and the turnover factor is 1 everyday, thus the method for calculating moving average with weighed transaction volume will be exactly the same as the existing method for calculating moving average. As can be seen, the existing method for calculating moving average is only one special case of the present disclosure. This shows the universality of the present disclosure.

The foregoing embodiments are provided to those skilled in the art for implementation or usage of the present disclosure. Various modifications or alternations can be made by those skilled in the art without departing from the spirit of the present disclosure. Therefore, the foregoing embodiments shall not be construed to be limiting to the scope of present disclosure. The scope of the present disclosure should be construed as the largest scope in accordance with innovative characters mentioned in the claims.

**Claims**

1. A method for calculating moving average with weighed transaction volume, comprising:

    selecting one stock, and acquiring a total stock capital of the stock;
    setting a calculating subject of accumulative transaction volume, wherein the calculating subject is all of or a part of the total stock capital of the stock;
    if a moving average with weighed transaction volume for a certain day is to be calculated, computing backwards from that day, accumulating the products of an everyday transaction volume multiplied by a turnover factor up until the accumulated value equals the calculating subject of accumulative transaction volume;
    multiplying an everyday average transaction price with an everyday transaction volume and further multiplying with an everyday turnover factor, adding up the products to form a sum; and
    dividing the sum by the calculating subject of accumulative transaction volume to obtain the moving average with weighed transaction volume.

2. The method of claim 2, wherein,
    for one stock, its transaction volume during a certain day is denoted by dv, and transaction amount is denoted by dt, thus an average transaction price for the stock during that day is computed as da=dv/dt;
    the stock has a total stock capital, all of or a part of which is taken as the calculating subject of accumulative transaction volume, denoted by tvol;
    if a moving average with weighed transaction volume for a certain day is to be calculated for the stock, compute backwards from that day, consider turnover during transactions, multiply an everyday transaction volume by a turnover factor e, and add up the products to form an accumulated value, where $0 \le e \le 1$;
    if the accumulated value is less than tvol, then compute back to another previous day, accumulate the products of a transaction volume of the another previous day multiplied by the turnover factor for n previous days, until the accumulated value by multiplying the transaction volume with the turnover factor is greater than or equal to tvol, i.e.,

$$\sum_{i=1}^{n} dv_i \cdot e_i \ge tvol$$

take a part of the transaction volume of the n previous days as dvpn , and let

$$dvp_n = dv_n \cdot e_n - \left( \sum_{i=1}^{n} dv_i \cdot e_i - tvol \right)$$

the moving average with weighed transaction volume is thus computed as:

$$\text{moving average with weighed transaction volume=} \frac{\sum_{i=1}^{n-1} dv_i \cdot e_i \cdot da_i + dvp_n \cdot da_n}{\sum_{i=1}^{n-1} dv_i \cdot e_i + dvp_n} ,$$

where dvi denotes transaction volume of a certain day, dai denotes an average transaction price of a certain day, ei denotes a turnover factor of a certain day, where $0 \leq ei \leq 1$, and i is an integral from 1 to n.

**3.** The method of claim 2, wherein, when $\sum_{i=1}^{n} dv_i \cdot e_i > tvol$ , without taking part of dvn, the calculation is directly performed as:

$$\text{moving average with weighed transaction volume=} \frac{\sum_{i=1}^{n} dv_i \cdot e_i \cdot da_i}{\sum_{i=1}^{n} dv_i \cdot e_i} .$$

**4.** The method of claim 2, wherein, without using dvn, then,

$$\text{moving average with weighed transaction volume=} \frac{\sum_{i=1}^{n-1} dv_i \cdot e_i \cdot da_i}{\sum_{i=1}^{n-1} dv_i \cdot e_i}$$

where $\sum_{i=1}^{n-1} dv_i \cdot e_i < tvol$ .

**5.** The method of any of claims 2-4, wherein, the average transaction price of a certain day dai is replaced by a closing price Pi.

## DECLARATION OF NON−ESTABLISHMENT OF INTERNATIONAL SEARCH REPORT

(PCT Article 17(2)(a),Rules 13 *ter.*1(c) and 39 )

| Applicant's agent's reference<br><br>072425pcwo | **IMPORTANT DECLARATION** | Date of mailing *(day/month/year)*<br><br>27 Mar. 2008 (27.03.2008) |
|---|---|---|
| International application No.<br><br>PCT/CN2007/071176 | International filing date *(day/month/year)*<br><br>05 Dec. 2007(05.12.2007) | (Earliest)Priority date*(day/month/year)*<br><br>01 Jun. 2007(01.06.2007) |
| International Patent Classification (IPC) or both national classification and IPC<br>**G06Q 30/00 (2006.01) i** | | |
| Applicant<br><br>WU Rongbin | | |

This International Searching Authority hereby declares, according to Article 17(2)(a), that **no international search report will be established** on the international application for the reasons indicated below.

1. ☒ The subject matter of the international application relates to:
   a. ☐ scientific theories
   b. ☐ mathematical theories
   c. ☐ plant varieties
   d. ☐ animal varieties
   e. ☐ essentially biological processes for the production of plants and animals, other than microbiological processes and the products of such processes
   f. ☒ schemes, rules or methods of doing business
   g. ☐ schemes, rules or methods of performing purely mental acts
   h. ☐ schemes, rules or methods of playing games
   i. ☐ methods for treatment of the human body by surgery or therapy
   j. ☐ methods for treatment of the animal body by surgery or therapy
   k. ☐ diagnostic methods practised on the human or animal body
   l. ☐ mere presentations of information
   m. ☐ computer programs for which this International Searching Authority is not equipped to search prior art

2. ☐ The failure of the following parts of the international application to comply with prescribed requirements prevents a meaningful search from being carried out:
   ☐ the description  ☐ the claims  ☐ the drawings

3. ☐ A meaningful search could not be carried out without the sequence listing; the applicant did not, within the prescribed time limit:
   ☐ furnish a sequence listing on paper complying with the standard provided for in Annex C of the Administrative Instructions, and such listing was not available to the International Searching Authority in a form and manner acceptable to it.
   ☐ furnish a sequence listing in electronic form complying with the standard provided for in Annex C of the Administrative Instructions, and such listing was not available to the International Searching Authority in a form and manner acceptable to it.
   ☐ pay the required late furnishing fee for the furnishing of a sequence listing in response to an invitation under Rule 13ter.1(a) or (b).

4. ☐ A meaningful search could not be carried out without the tables related to the sequence listings; the applicant did not, within the prescribed time limit, furnish such tables in electronic form complying with the technical requirements provided for in Annex C-bis of the Administrative Instructions, and such tables were not available to the International Searching Authority in a form and manner acceptable to it.

5. ☒ Further comments: The present application relates to a method for calculating the moving average by using the weighted bargain amount, so it's subject matter belongs to schemes, rules or methods of doing business under PCT Rule 39.1(iii). Thus, no international search report will be established.

| Name and mailing address of the ISA/CN<br><br>The State Intellectual Property Office, the P.R.China<br><br>6 Xitucheng Rd., Jimen Bridge, Haidian District, Beijing, China 100088<br>Facsimile No.  86-10-62019451 | Authorized officer<br><br>ZHAO,Weihua<br><br><br>Telephone No. (86-10)62411830 |
|---|---|

Form PCT/ISA/203(April.2005)